# EUROPÄISCHE PATENTSCHRIFT

(11) **EP 0 750 165 B1**
(45) Veröffentlichungstag und Bekanntmachung des Hinweises auf die Patenterteilung: **04.09.2002**
(21) Anmeldenummer: 96109788.8
(22) Anmeldetag: 18.06.1996
(51) Int. Cl.: F24J 2/04

(54) **Wärmedämmverbundsystem**
Thermal insulation compound system
Système composite pour isolation thermique

(30) Priorität: 19.06.1995 DE 19522170
(43) Veröffentlichungstag der Anmeldung: 27.12.1996
(73) Patentinhaber: STO AG, 79780 Stühlingen (DE)
(72) Erfinder: Grochal, Peter, Dr., 79761 Waldshut-Tiengen (DE)
(74) Vertreter: Patentanwälte Leinweber & Zimmermann

(56) Entgegenhaltungen:
- EP-A- 0 038 397
- EP-A- 0 333 145
- DE-A- 3 008 610
- FR-A- 2 350 559

## Beschreibung

Die Erfindung bezieht sich auf ein an einer Gebäudewand festlegbares transparentes Wärmedämmverbundsystem (WDVS) zur Gewinnung von Wärmeenergie im Bereich einer Lichtabsorberschicht, die unterhalb eines zumindest teilweise lichtdurchlässigen Wärmedämmaterials, ggf. einer lichtdurchlässigen Armierung und einer außenseitig vorgesehenen wetterbeständigen, zumindest teilweise lichtdurchlässigen Deckschicht oder -platte vorgesehen ist. Bei einem bekannten WDVS dieser Art (EP-A 333 145), umfaßt das Wärmedämmaterial kapillare Platten aus einer Vielzahl von aneinanderliegenden, einen geringen Duchmesser aufweisenden, miteinander verbundenen Kunststoffröhrchen, die quer zur Plattenebene, d.h. in Lichtdurchtrittsrichtung ausgerichtet sind. Diese Platten können an der Wandaußenfläche des Gebäudes mittels einer Klebstoffschicht festgelegt sein, die die lichtabsorbierende Schicht bildet. Sie können jedoch auch in einem Abstand von der Wand mit ihrer lichtabsorbierenden Außenfläche auf einer Tragkonstruktion festgelegt sein.

Es ist ferner bereits bekannt (DE 31 41 931 A1), Wärmeenergie mit Hilfe eines an einer Gebäudewand festgelegten Systems von Sonnenkollektoren zu gewinnen, bei dem die Lichtabsorberschicht vor einem schmalen vertikalen Raum vorgesehen ist, in dem die erwärmte Luft zirkulieren und von dem aus sie einem Wärmekreislauf mit einem im Gebäude befindlichen Wärmeelement zugeführt werden kann. Unmittelbar angrenzend ist ein Flüssigkeitskreislauf vorgesehen, in dem erhitzte Flüssigkeit zirkuliert, um die in ihr enthaltene Wärmeenergie ebenfalls einem Wärmeelement im Gebäudeinneren zuzuführen. Der Flüssigkeitskreislauf grenzt an eine Wärmedämmschicht an, die eine unkontrollierte Wärmeabfuhr ins Gebäudeinnere unterbindet. Diese Ausführung ermöglicht zwar die Überführung der auf eine höhere Temperatur erhitzten Flüssigkeit vom Bereich der Lichtabsorberschicht zu einem Wärmeverbrauchsort. Die Konstruktion ist jedoch sehr aufwendig, da die einzelnen Bauelemente den gegebenen Abmessungen des Gebäudes angepaßt und nach getrennter Anlieferung an Ort und Stelle zusammengefügt werden müssen.

Bekannt ist ferner ein der Fassadenverkleidung dienendes Fassadenelement (EP 0 590 625 A1) für eine eine Wärme-Isolierschicht umfassende Fassadenverkleidung, die einen Wärme-Kollektorstrang zur Wärmenutzung mit einem Strömungsmedium in Verbindung mit einer Wärmepumpenanlage aufweist. Auch diese Ausführung bedarf einer sehr genauen Bauplanung, um die einzelnen exakt bemessenen Elemente an Ort und Stelle sinnvoll zu einem funktionierenden Ganzen zusammenzufügen.

Der Erfindung liegt die Aufgabe zugrunde, da Wärmedämmverbundsystem der eingangs genannten Art so weiter auszubilden, daß sich eine sehr einfache, schnell zu realisierende Ausführung ergibt.

Das Wärmedämmverbundsystem nach der Erfindung, bei dem diese Aufgabe gelöst ist, zeichnet sich im wesentlichen dadurch aus, daß das Wärmedämmverbundsystem zu einem eine Einheit bildenden Fassadenelement, bestehend aus der Schicht aus dem zumindest teilweise lichtdurchlässigen Wärmedämmaterial einer auf ihrer der Vorderfläche abgewandten hinteren Fläche befindlichen gut wärmeleitfähigen Lichtabsorberschicht mit einer an dieser anliegenden bzw. in sie eingelassenen, der Wärmeleitung dienenden Fluidrohmetz mit Zulauf- bzw. Ablaufanschlüssen für eine als Wärmeträger dienende Flüssigkeit vorhanden ist, das in vorgefertigtem Zustand in eine bezüglich der Abmessungen angepaßte Aussparung eines normalen WDVS-Systems einfügbar ist.

Aufgrund der erfindungsgemäßen Ausbildung ist die Möglichkeit einer besonders rationellen Vorfertigung gegeben. Diese führt ferner dazu, daß sich derartige Fassadenelement-Einheiten zur Sonnenenergieausnutzung relativ bequem an Ort und Stelle in entsprechend bemessene Aussparungen des konventionellen Wärmedämmverbundsystems einfügen lassen. Nach Verbindung der Zulauf- und Ablaufanschlüsse an den im Gebäude vorgesehenen Flüssigkeitskreislauf läßt sich die gewonnene Wärmeenergie dort hinleiten, wo sie einer sinnvollen Nutzung dienlich ist. Im Sommer wird man in erster Linie Heißwasserspeicher, die mit Bade- bzw. Duschsystemen in Verbindung stehen, beschicken. Es ist natürlich auch möglich, die Wärme einem Schwimmbad zuzuführen und dadurch den Bedarf an Heizenergie für das Erwärmen des Wassers zu senken, oder die Wärmeenergie einem Langzeitenergiespeicher (Sand, Kies, Wasser, Salz) für die Heizperiode als Vorrat zuzufügen. In jedem-Fall ergeben sich erhebliche Einsparungen an fossilen Brennstoffen. Auch dabei ist es vorteilhaft, die wärmeübertragende Flüssigkeit direkt oder indirekt (über Wärmetauscher oder Wärmepumpe) dem Gebäude-Heizsystem z.B. zuzuführen.

Gerade in den Sommermonaten sorgt die fragliche Wärmeableitung aus dem Bereich der Lichtabsorberschicht für eine Verminderung der Temperaturdifferenzen über den Gebäudewandquerschnitt und damit eine Senkung der Gefahr von Rißbildungen.

Eine besonders vorteilhafte Ausführung des WDVS mit integriertem Fluidrohrnetz in der Absorberschicht ergibt sich durch Koppelung direkt oder indirekt mit einem (oder mehreren) zusätzlich an der Wandbildner-Innenseite (Innenwand, Decke) angebrachten zusätzlichen Fluidrohrnetz, das vorzugsweise in der Innenputzschicht verdeckt angeordnet ist. So ergibt sich eine vorteilhafte kombinatorische Funktion des Fluidrohrnetzes in der Absorberschicht und des zusätzlichen Fluidrohrnetzes in der Innenputzschicht einerseits bei Winter- und andererseits bei Sommerbetrieb.

Im Winter wird die in der Absorberschicht des Wärmedämmverbundsystems gewonnene Wärme durch das Heizsystem oder Fluidrohrnetz auf der Rauminnenseite sofort in das Rauminnere geleitet. Der Raum kann also entgegen der Standardanwendung des WDVS ohne Verzögerung beheizt werden. hiermit ist eine hohe Energieeffizienz und Regelungsflexibilität gewährleistet, unabhängig von der Wärmeleitfähigkeit des Wandbildners. Im Sommer bietet sich vorteilhaft an, die wärmeübertragende Flüssigkeit (z.B. Leitungswasser) nach Bedarf zuerst die Warmwasser-Heizkörper oder das an der Rauminnenseite angebrachte zusätzliche Fluidrohrnetz durchströmen zu lassen und so zur aktiven Kühlung zu verwenden und anschließend in die Absorberschicht des WDVS zu leiten, zu erwärmen und so auf sinnvolle Weise weiter zu nutzen.

Als sehr zweckmäßig hat es sich herausgestellt, wenn das Fluidrohrnetz aus Röhrchen aus Kunststoff, vorzugsweise Polyäthylen oder Polypropylen, bzw. aus Metall, vorzugsweise Kupfer gebildet ist.

Eine besonders gute Ausnutzung der durch das Wärmedämmaterial einfallenden Energie ergibt sich, wenn das Fluidrohrnetz in eine die Lichtabsorberschicht bildende Trägerplatte eingelagert ist.

In sehr vorteilhafter Weise kann das Fluidrohrnetz in eine die Lichtabsorberschicht bildende Mörtelschicht mit hoher Wärmeleitfähigkeit eingelagert sein.

Schwere Wände, die im Altbaubereich anzutreffen sind, sind für transparente Wärmedämmverbundsysteme besser geeignet als dämmende Wände, wie sie im Neubaubereich regelmäßig anzutreffen sind. Der fragliche Hybrid-Aufbau des transparenten Wärmedämmverbundsystems ist dagegen bei schweren Wänden zwangsläufig weniger geeignet als bei dämmenden Wänden. Um auch Wände mit schlecht dämmenden Eigenschaften sinnvoll mit einem Hybridaufbau auszurüsten, hat es sich als günstig erwiesen, wenn zwischen die die Aussparung begrenzende Gebäudeaußenfläche und das Fluidrohrnetz enthaltende, als Einheit ausgebildete Fassadenelement eine Wärmedämmschicht eingeschaltet ist. Diese sorgt dafür, daß die in der Lichtabsorberschicht und damit im Bereich des Fluidrohrnetzes anfallende Wärmeenergie nicht zu einem wesentlichen Teil abfließt sondern vielmehr kumuliert wird und zu einem Temperaturanstieg führt.

Zweckmäßigerweise besteht die zwischengeschaltete Wärmedämmschicht aus auf die Gebäudeaußenwand aufgebrachten Dämmplatten. Stattdessen kann jedoch auch ein Dämmputz bzw. eine dämmende Mörtelschicht vorgesehen sein.

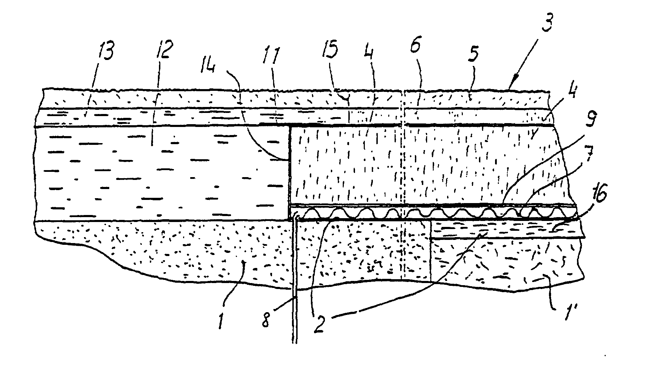

Weitere Einzelheiten, Vorteile und Merkmale der Erfindung ergeben sich aus der folgenden Beschreibung anhand der beigefügten Zeichnung, in der äußerst schematisch und keineswegs maßstabsgetreu das Wärmedämmverbundsystem in seiner prinzipiellen Hybridausgestaltung beispielsweise veranschaulicht ist.

Wie aus der Zeichnung ersichtlich, ist an einer Gebäudewand 1, genauer an der Wandaußenfläche 2 ein transparentes Wärmedämmverbundsystem 3 festlegbar. Dieses umfaßt ein zumindest teilweise lichtdurchlässiges Wärmedämmaterial 4, das außenseitig gegen Witterungseinwirkungen geschützt ist. Zu diesem Zweck ist das Wärmedämmaterial 4 zumindest teilweise lichtdurchlässig und mit einer wetterbeständigen Dämmschicht 5 versehen, so daß der Strahlungstransmissionsgrad des Sonnenlichtes bei senkrechter Einstrahlung und Schichtdicken zwischen 0,5 mm und 6 mm über 20% liegt. Zwischen der lichtdurchlässigen Deckschicht 5, die einen putzartigen Charakter besitzt, und dem Wärmedämmaterial 4 ist im veranschaulichten Ausführungsbeispiel eine lichtdurchlässige Armierung 6 angeordnet. Anstelle der lichtdurchlässigen Deckschicht 5 mit putzartigem Charakter könnte in an sich bekannter Weise auch eine Glas- oder auch eine lichtdurchlässige Kunststoffplatte, ggf. mit eingeprägter Musterung vorgesehen sein.

Erfindungsgemäß ist das Wärmedämmaterial 4 nicht unmittelbar, beispielsweise mittels einer Klebstoffschicht an der Wandaußenfläche 2 festgelegt. Es ist vielmehr auf der Wandaußenfläche 2 ein der Wärmeableitung dienendes Fluidrohrnetz 7 vorgesehen. Dieses ist in der Zeichnung nur schematisch mit einer Wellenlinie angedeutet, weist eine Stärke von bis zu 2 cm auf und ist aus Röhrchen aus Kunststoff, vorzugsweise Polyäthylen oder Polypropylen, bzw. aus Metall, vorzugsweise Kupfer gebildet. Zulauf- und Ablaufanschlüsse 8 ermöglichen einen Flüssigkeitskreislauf. Das Fluidrohrnetz 7 liegt, wie in der Zeichnung angedeutet, an einer Lichtabsorberschicht 9 an, die an der hinteren Fläche des Wärmedämmaterials 4 vorgesehen ist, oder ist in diese Lichtabsorberschicht 9 eingelassen, wobei letztere eine Trägerplatte bildet. Die Trägerplatte besteht dabei aus mehr als 70%, vorzugsweise aus 95% Blähglas. Als günstig hat es sich erwiesen, wenn die Trägerplatte in ihrem der Außenseite des Gebäudes zugewandten Bereich aus einem wärmedämmenden Material und in ihrem die Lichtabsorberschicht 9 sowie das Fluidrohrnetz 7 beinhaltenden Bereich aus einem gut wärmeleitenden Material besteht. Als günstig hat es sich erwiesen, wenn das Fluidrohrnetz 7 in eine die Lichtabsorberschicht 9 bildende Mörtelschicht mit hoher Wärmeleitfähigkeit eingelagert ist. dabei kann die das Fluidrohrnetz und die Lichtabsorberschicht beinhaltende Mörtelschicht auch auf eine der Gebäudeaußenwand zugewandte Trägerplatte aus einem wärmedämmenden Material aufgebracht sein.

Günstigerweise sind die Anschlüsse 8 des Fluidrohrnetzes unter dem normalen Wärmedämmverbundsystem an der Gebäudeaußenwand angebracht. In jedem Fall ist die Schicht aus dem Wärmedämmaterial 4, die Lichtabsorberschicht 9 und das Fluidrohrnetz 7 zu einem eine Einheit bildenden Fassadenelement ausgestaltet, das in vorgefertigtem Zustand in eine bezüglich der Abmessungen angepaßte Aussparung des normalen WDSV-Systems eingefügt ist.

Aus der Zeichnung ist entnehmbar, daß der Bereich der Plattengröße 14, die die seitliche Begrenzung der Aussparung definieren, im veranschaulichten Ausführungsbeispiel nach dem Einfügen des das Fluidrohrnetz 7 enthaltenden Fassadenelements durch zusätzliche Armierung 11 (Glasgewebe, Glasvlies, lichtdurchlässiges Klebeband verstärkt werden kann.

Der Zeichnung ist ferner entnehmbar, daß sich das lichtdurchlässige Wärmedämmaterial 4 des eingesetzten Fassadenelements unmittelbar an ein an der Gebäudewand 1 festgelegtes opakes Wärmedämmaterial 12 anschließen kann, und zwar derart, daß das Wärmedämmverbundsystem einen zumindest teilweise lichtdurchlässigen Bereich und einen lichtundurchlässigen Bereich umfaßt. Zur Schaffung einer fugenlosen Verbindung der opaken Wärmedämmplatten 12 mit dem Wärmedämmaterial 4 in Form der lichtdurchlässigen Wärmedämmplatten kann die die opaken Platten abdeckende Armierung 13 über die Plattenstöße 14 zwischen den opaken und den lichtdurchlässigen Wärmedämmplatten hinwegreichend aufgetragen sein. An diese Armierung schließt sich die die lichtdurchlässigen Wärmedämmplatten abdeckende lichtdurchlässige Armierung 6 unmittelbar bündig an . Es ist möglich, ein und dieselbe wetterbeständige Deckschicht 5 zur Abdeckung sowohl des opaken Wärmedämmaterials 12 als auch des lichtdurchlässigen Wärmedämmaterials 4, ggf. über die Armierungen 13 bzw. 6 zu verwenden. Stattdessen kann sich an die Deckschicht 5 an der Übergangszone 15 vom einen Gebiet zum anderen auch ein opaker Putz bündig anschließen.

Wie aus der Zeichnung ersichtlich, ist etwa im mittleren Bereich der Fall veranschaulicht, daß das Fassadenelement mit dem Wärmedämmaterial 4, der Lichtabsorberschicht 9 und dem mit dieser einheitlich verbundenen Fluidrohrnetz 7 unmittelbar auf der Außenfläche 2 der Gebäudewand 1 festgelegt ist. Dieser Aufbau kommt dann in Frage und führt zu positiven Ergebnissen, wenn die Gebäudewand selbst ausreichend dämmende Eigenschaften besitzt.

Bei Ausrüstung von Gebäudewänden 1' mit guter Wärmeleitfähigkeit bedarf es dagegen der Zwischenschaltung einer Wärmedämmschicht 16 zwischen Wandaußenfläche 2 der Gebäudewand 1' und Fassadenelement mit integriertem Fluidrohrnetz 7, um für eine Kumulierung der Wärmeenergie und damit einen Temperaturanstieg zu sorgen.

Das in der Zeichnung veranschaulichte Fluidrohrnetz 7 kann über die Anschlüsse 8 mit einem entsprechenden, nicht dargestellten Fluidrohrnetz zu einem geschlossenen Kreislauf verbunden sein, das auf der zugehörigen benachbarten Wandinnenfläche vorgesehen, ggf. in eine Innenputzschicht eingelagert ist. es ist jedoch auch möglich, in sehr vorteilhafter Weise ein Fluidrohrnetz in einem mehr abgelegenen Raumbereich anzuordnen und wahlweise von dem Fluidrohrnetz 7 des Fassadenelements aus zu beschicken.

Insbesondere in der heißen Jahreszeit lassen sich Überhitzungen von Räumen vermeiden - bei gleichzeitiger Nutzung der anfallenden Wärmeenergie - , indem das auf der Wandinnenseite vorgesehene Fluidrohrnetz mit kühlerem Frischwasser beschickt wird, das anschließend in das Fluidrohrnetz 7 geleitet wird, wobei das erwärmte Wasser dann zu einem Verbrauchsort abgeleitet wird, ggf. über eine zwischengeschaltete Wärmepumpe.

Drei Beispiele für die Formulierung des putzartig auftragbaren Deckschichtmaterials sind nachstehend angegeben. Die in diesen Beispielen angegebene Masse ist nicht nur zur Bildung der Deckschicht 5, sondern auch als Armierung 6, ggf. unter Einlagerung von Gewebe, einsetzbar.

### Beispiel 1:

Zusammensetzung einer ersten Bindemittelkomponente

| | |
|---|---|
| 93,8 Gew.-% | Acrylatdispersion |
| 0,7 Gew.-% | Konservierungsmittel |
| 3,5 Gew.-% | Lösemittel |
| 1,0 Gew.-% | Entschäumer |
| 1,0 Gew.-% | Verdickungsmittel |
| 100,0 Gew.-% | |

### Beispiel 2:

| | |
|---|---|
| 25,0 Gew.-% | Acrylatharz |
| 71,5 Gew.-% | Lösemittel |
| 0,5 Gew.-% | Verdickungsmittel |
| 3,0 Gew.-% | Weichmacher |
| 100,0 Gew.-% | |

### Beispiel 3:

Zusammensetzung einer dritten Bindemittelkomponente

| | |
|---|---|
| 61,6 Gew.-% | Polyol |
| 38,1 Gew.-% | (Poly)isocyanat (aliphatisch) |
| 0,3 Gew.-% | Additive |
| 100,0 Gew.-% | |

## Patentansprüche

1. An einer Gebäudewand festlegbares transparentes Wärmedämmverbundsystem (WDVS) (3) zur Gewinnung von Wärmeenergie im Bereich einer Lichtabsorberschicht, (9), die unterhalb eines zumindest teilweise lichtdurchlässigen Wärmedämmaterials (4), ggf. einer lichtdurchlässigen Armierung (6) und einer außenseitig vorgesehenen wetterbeständigen, zumindest teilweise lichtdurchlässigen Deckschicht (5) oder -platte vorgesehen ist, **dadurch gekennzeichnet, daß** das Wärmedämmverbundsystem zu einem eine Einheit bildenden Fassadenelement, bestehend aus der Schicht aus dem zumindest teilweise lichtdurchlässigen Wärmedämmaterial (4) einer auf ihrer der Vorderfläche abgewandten hinteren Fläche befindlichen, gut wärmeleitfähigen Lichtabsorberschicht (9) und einem an dieser anliegenden bzw. in sie eingelassenen, der Wärmeableitung dienenden Fluidrohrnetz (7) mit Zulauf- bzw. Ablaufanschlüssen (8) für eine als Wärmeträger dienende Flüssigkeit, verbunden ist, das in vorgefertigtem Zustand in eine bezüglich der Abmessungen angepaßte Aussparung eines normalen WDVS-Systems einfügbar ist.

2. Wärmedämmverbundsystem nach Anspruch 1, **dadurch gekennzeichnet, daß** das Fluidrohrnetz (7) aus Röhrchen aus Kunststoff, vorzugsweise Polyäthylen oder Polypropylen, bzw. aus Metall, vorzugsweise Kupfer gebildet ist.

3. Wärmedämmverbundsystem nach Anspruch 1 oder 2, **dadurch gekennzeichnet, daß** das Fluidrohrnetz (7) in eine die Lichtabsorberschicht (9) bildende Trägerplatte eingelagert ist.

4. Wärmedämmverbundsystem nach einem der Ansprüche 1 bis 3, **dadurch gekennzeichnet, daß** zwischen die die Aussparung begrenzende Gebäudeaußenfläche (2) und das das Fluidrohrnetz (7) enthaltende, als Einheit ausgebildete Fassadenelement eine Wärmedämmschicht (16) eingeschaltet ist.

5. Wärmedämmverbundsystem nach Anspruch 4, **dadurch gekennzeichnet, daß** die Trägerplatte aus mehr als 70% besonders vorteilhaft aus 95% Blähglas besteht.

6. Wärmedämmverbundsystem nach einem der Ansprüche 1 bis 3, **dadurch gekennzeichnet, daß** die Trägerplatte in ihrem der Außenseite des Gebäudes zugewandten Bereich aus einem wärmedämmenden Material und in ihrem die Lichtabsorberschicht (9) sowie das Fluidrohrnetz beinhaltenden Bereich aus einem gut wärmeleitenden Material besteht.

7. Wärmedämmverbundsystem nach Anspruch 1 oder 2, **dadurch gekennzeichnet, daß** das Fluidrohrnetz (7) in eine die Lichtabsorberschicht (9) bildende Mörtelschicht mit hoher Wärmeleitfähigkeit eingelagert ist.

8. Wärmedämmverbundsystem nach Anspruch 1 oder 2 und Anspruch 7, **dadurch gekennzeichnet, daß** die das Fluidrohrnetz und die Lichtabsorberschicht beinhaltende Mörtelschicht auf eine der Gebäudeaußenwand zugewandten Trägerplatte aus einem wärmedämmenden Material aufgebracht ist.

9. Wärmedämmverbundsystem nach einem oder mehreren der Ansprüche 1 bis 8, **dadurch gekennzeichnet, daß** die der Wärmeableitung dienenden Zulauf- bzw. Ablaufanschlüsse (8) des Fluidrohrnetzes unter dem normalen Wärmedämmverbundsystem an der Gebäudeaußenwand angebracht sind.

## Claims

1. Transparent composite thermal insulation system (CTIS) (3) which can be fixed to a building wall for the recovery of thermal energy in the region of a light-absorbing layer (9) provided below an at least partially transparent heat-insulating material (4) or a transparent reinforcement (6) and a weather-resistant, at least partially transparent outer layer (5) or panel provided on the outside, **characterised in that** the composite thermal insulation system is joined to a façade element which forms a unit consisting of the layer of the at least partially transparent heat-insulating material (4), a highly thermally conductive light-absorbing layer (9) situated on its rear surface directed away from the front surface and a fluid pipe network (7) adjacent thereto or formed therein serving for heat dissipation and provided with inlet and outlet ports (8) for a liquid serving as a heat transfer medium, and which can be inserted in the prefabricated state into an appropriately dimensioned recess in a normal CTIS system.

2. Composite thermal insulation system according to claim 1, **characterised in that** the fluid pipe network (7) is formed of tubes made of plastic, preferably polyethylene or polypropylene, or of metal, preferably copper.

3. Composite thermal insulation system according to claim 1 or claim 2, **characterised in that** the fluid pipe network (7) is embedded in a support plate forming the light-absorbing layer (9).

4. Composite thermal insulation system according to one of claims 1 to 3, **characterised in that** a heat-insulating layer (16) is interposed between the outer face (2) of the building delimiting the recess and the façade element in the form of a unit containing the fluid pipe network (7).

5. Composite thermal insulation system according to claim 4, **characterised in that** the support plate consists of more than 70 %, particularly advantageously more than 95 % bloated glass.

6. Composite thermal insulation system according to one of claims 1 to 3, **characterised in that** the support plate consists of a heat-insulating material in its region directed towards the outer face of the building and of a highly thermally conductive material in its region containing the light-absorbing layer (9) and the fluid pipe network.

7. Composite thermal insulation system according to claim 1 or claim 2, **characterised in that** the fluid pipe network (7) is embedded in a mortar layer with high thermal conductivity forming the light-absorbing layer (9).

8. Composite thermal insulation system according to claim 1 or claim 2 and claim 7, **characterised in that** the mortar layer containing the fluid pipe network and the light-absorbing layer is applied to a support plate made of a heat-insulating material directed towards the outer wall of the building.

9. Composite thermal insulation system according to one or more of claims 1 to 8, **characterised in that** the inlet and outlet ports (8) of the fluid pipe network serving for heat dissipation are applied to the outer wall of the building below the normal composite thermal insulation system.

## Revendications

1. Système composite d'isolation thermique (SCIT) (3) transparent pouvant être fixé sur un mur de bâtiment pour la récupération d'énergie thermique dans la zone d'une couche d'absorption de lumière (9) qui est prévue sous un matériau d'isolation thermique (4), au moins partiellement transparent à la lumière, le cas échéant une armature transparente (6), et une couche ou panneau de finition (5) résistant aux intempéries, au moins partiellement transparente, prévue du côté extérieur, **caractérisé en ce que** le système composite d'isolation thermique est relié en un élément de façade formant une unité, qui est constitué de la couche de matériau d'isolation thermique (4), au moins partiellement transparent, d'une couche d'absorption de lumière (9) de bonne conductibilité thermique appliquée sur sa face arrière opposée à la face avant, et d'un réseau (7) de tubes de fluide appliqué sur ou intégré dans cette couche servant à l'évacuation de la chaleur, comportant des raccordements d'alimentation ou d'évacuation (8) pour un liquide servant d'agent caloporteur, qui peut être inséré à l'état préfabriqué dans un évidement de dimensions adaptées d'un système composite normal d'isolation thermique.

2. Système composite d'isolation thermique selon la revendication 1, **caractérisé en ce que** le réseau (7) de tubes de fluide est constitué de tubes en matière plastique, de préférence en polyéthylène ou en polypropylène, ou en métal, de préférence cuivre.

3. Système composite d'isolation thermique selon la revendication 1 ou 2, **caractérisé en ce que** le réseau (7) de tubes de fluide est intégré dans une plaque de support formant la couche d'absorption de lumière (9).

4. Système composite d'isolation thermique selon l'une quelconque des revendications 1 à 3, **caractérisé en ce qu'**une couche d'isolation thermique (16) est intercalée entre la face extérieure (2) du bâtiment délimitant l'évidement et l'élément de façade agencé en tant qu'unité contenant le réseau (7) de tubes de fluide.

5. Système composite d'isolation thermique selon la revendication 4, **caractérisé en ce que** la plaque de support est constituée de plus de 70 % de verre expansé, de façon particulièrement avantageuse de 95 %.

6. Système composite d'isolation thermique selon l'une quelconque des revendications 1 à 3, **caractérisé en ce que**, dans sa zone orientée vers la face extérieure du bâtiment, la plaque de support est constituée d'un matériau d'isolation thermique et, dans sa zone contenant la couche d'absorption de lumière (9) ainsi que le réseau de tubes de fluide, d'un matériau de bonne conductibilité thermique.

7. Système composite d'isolation thermique selon la revendication 1 ou 2, **caractérisé en ce que** le réseau (7) de tubes de fluide est intégré dans une couche de mortier de haute conductibilité thermique constituant la couche d'absorption de lumière (9).

8. Système composite d'isolation thermique selon la revendication 1 ou 2 et la revendication 7, **caractérisé en ce que** la couche de mortier contenant le réseau de tubes de fluide et la couche d'absorption de lumière est appliquée sur une plaque de support en un matériau d'isolation thermique orientée vers le mur extérieur du bâtiment.

9. Système composite d'isolation thermique selon l'une quelconque ou plusieurs des revendications 1 à 8, **caractérisé en ce que** les raccordements d'alimentation ou d'évacuation (8) du réseau de tubes de fluide servant à l'évacuation de la chaleur sont fixés au mur extérieur du bâtiment sous le système composite normal d'isolation thermique.
